# EUROPEAN PATENT SPECIFICATION

(11) **EP 2 741 619 B1**
(45) Date of publication and mention of the grant of the patent: **17.08.2016**
(21) Application number: 12772441.7
(22) Date of filing: 08.08.2012
(51) Int. Cl.: A23L 19/00, A23L 29/30, A23L 7/10, A23L 5/00, A23L 5/20

(54) **METHOD FOR THE PRODUCTION OF POWDERED OLIVES**
VERFAHREN ZUR HERSTELLUNG EINES OLIVENPULVERS
PROCÉDÉ DE FABRICATION D'OLIVES EN POUDRE

(30) Priority: 09.08.2011 TR 201107871
(43) Date of publication of application: 18.06.2014
(73) Proprietor: Tubitak, 06100 Ankara (TR)
(72) Inventor: OZTURK, Tarik, 41470 Kocaeli (TR); UYGUN, Nabi, 41470 Kocaeli (TR); GOZUM, Ender, 41470 Kocaeli (TR); BORCAKLI, Mehlika, 41470 Kocaeli (TR)
(86) International application number: PCT/IB2012/054047
(87) International publication number: WO 2013/021358

(56) References cited:
- KR-A- 20020 040 930
- DATABASE WPI Week 200276 Thomson Scientific, London, GB; AN 2002-704714 XP002688149, & KR 2002 0040930 A (LEE S W) 31 May 2002 (2002-05-31) cited in the application
- DATABASE WPI Week 201008 Thomson Scientific, London, GB; AN 2010-A60141 XP002688150, & CN 101 606 663 A (KUNMING GREEN FIELD BIOLOGICAL PROD) 23 December 2009 (2009-12-23)
- DATABASE WPI Week 201135 Thomson Scientific, London, GB; AN 2011-F25502 XP002688151, & CN 101 999 606 A (JIANG K) 6 April 2011 (2011-04-06)
- DATABASE WPI Week 200870 Thomson Scientific, London, GB; AN 2008-L86871 XP002688152, & CN 101 104 015 A (ZHENG J) 16 January 2008 (2008-01-16)

## Description

### Subject of the Invention

The subject of this invention is production method of olive powder with easily pourable properties, by using olives physically and/or chemically treated/untreated whole organic/not organic grinded olive fruit and powder of natural green, black and turned colour olive produced by this method.

### State of art

Olive and olive oil are used by human beings in different receipts and forms of utilization for more than thousands years. The oldest main use of olives were table olives and olive oil.

Within time the idea of not only utilizing olives but also make use of the rests coming out of the olive processing is arised and studies were done.

During these studies, experiments were encountered on the utilization, drying and purification of the wastes in liquid form coming from olive oil production. At the scope of these experiments, studies were done to produce olive powder from rests coming from olive oil production, but these studies were not related with olive powder produced from whole not deoiled olive fruits.

Only two patents were found being similar to this invention. In patent numbered US20070134402 and entitled 'Dry flavoring blend and method of making same' preferably green olives were ground after drying and were used by adding to a spice mixture. However, in number US20070134402 application there is no explanation on the caking problem of olive powder and on the whole dryed olive powder but only a spice mixture is mentioned. Our invention finds a solution to this problem.

In KR 200200409302 numbered 2^{nd} patent (Production of olive powder and olive powder composition), olives were in pureed form, their bitterness were removed by degradation (hydrolyzed), and as puree was deoiled it contained maximum 20 % oil. Further the polyphenol oxidase activity was reduced. In our invention not puree but whole dried olives were used and their bitterness were removed by diffusion from olives, but not degraded. As oil removal was not the case dried olives could contain up to 70% oil by weight.

### Description of the invention

Before making powder from whole olive fruits that physically and/or chemically treated or not treated, they have to be dried. For this process dry olives are obtained by putting olives in an incubator with/without fan, vacuum incubator, solar dryer, microwave, infrared dryer or lyophilizator and dried for 24-120 hours at -80 to 80 ° C.

### Example 1:

Physically and/or chemically treated/non treated whole olives are spreaded on a oven tray and are placed in a fan incubator at 50 ° C for 37 hours to dry. It is observed that moisture of olives have decreased from %64,1±2.4 to % 1.3±0.4, after drying and olives have lost 60-65% of their weight.

### Production of olive powder

Olive fruits and especially black olive fruits are containing high amounts of oil. This oil is found in dried whole olives, captured in the cell membranes. When whole olives are ground to obtain a powder, the cell membranes are disrupted and oil droplets are released and ground dry olives become an oily puree that makes impossible to obtain a dry powder product from the puree. When this olive in pureed form is mixed with oil absorbing substances a homogeneous mixture can not be obtained and a caked texture is formed.

The solution found in our invention is grinding whole dried olives together with ground oil absorbing substances; ground cereals or their flour or bran, starch, hydrolyzed, extruded flours, pre-gelatinized starch, resistant starch and substances like protein. Addition to oil absorbing substances, optionally anti caking agents and aroma and flavor giving substances, can be added during or after grinding.

The oil released during grinding olives to a puree with a high speed grinder, is immediately mixed and absorbed that oil can not be accumulated and no cake is formed in certain parts of the mixture. In this process the powder obtained from whole olives, oil absorbing particles are not showing sticky character as they are not reaching their maximum oil absorbing capacity and resulting powder can easily flow.

Another advantage of this method is that; there is no problem of excessive oil release from the dried olives, as released oil is immediately absorbed and olives can be reduced to as small as possible particles like flour particle size. Relatively bigger particles in the olive containing powder can be removed by sieving at the last step, if it is desired.

### Example 2:

In average, 30% of 62% oil containing black dried olives and 70% of wheat flour or other oil absorbing material are mixed in a beaker. This mixture is grinded for 3 minutes in a bladed blender. The powder obtained is sieved through a sieve with 2 mm pore size and packaged in a vacuum packaging material (low gas permeability).

## Claims

1. A method for obtaining powdered olives, **characterized in that** destoned and dried whole olives are grounded in the presence of an oil absorbing substance.

2. The method according to claim 1, wherein all organic or non organic olive cultivars are used as raw material.

3. The method according to claim 1, wherein moisture is reduced by drying the olives in order to prevent cake formation during grinding process, **characterized in that**, the drying process is made between -80 ° C to 80 ° C for 24-120 hours in a fan, fanless and vacuum incubator, solar, microwave, infrared dryer or lyophilizer.

4. The method according to claim 1, wherein nutritious materials that are beneficiary to nutrition and health, are used during grinding as oil absorbing substance.

5. The method according to claim 1, wherein oil absorbing substance to be used during grinding process is selected from one or more of grinded cereals, their flour, their bran or their starch, pregelatinized and resistant starch having protein.

6. The method according to claim 1, wherein oil absorbing substance to be used during grinding process is extruded or hydrolysed flour.

7. The method according to claim 1, wherein during or after grinding optionally anti caking agents are supplemented in addition to oil absorbing substances.

8. The method according to claim 1, wherein during or after grinding, aroma or taste enhancing substances are supplemented to whole olives in addition to oil absorbing substances.

## Patentansprüche

1. Ein Verfahren zum Herstellen von Trockenoliven, charakterisiert dadurch, dass entkernte und getrocknete ganze Oliven in Gegenwart von einem Ölabsorptionsmittel gemahlen werden.

2. Das Verfahren gemäss Anspruch 1, in dem alle organischen oder anorganischen Olivenkulturpflanzen als Rohstoff verwendet werden.

3. Das Verfahren im Anspruch 1, in dem die Feuchtigkeit durch das Trocknen der Oliven reduziert wird, um die Blockbildung während des Mahlverfahrens zu verhindern, charakterisiert dadurch, dass das Trockenverfahren für eine Dauer von 24-120 Stunden bei einer Temperatur von -80°C bis 80°C in einem Ventilator, lüfterlosen und luftleeren Wärmeschrank, Sonnen-, Mikrowelle-, Infrarottrockner oder einer Lyophille stattfindet.

4. Das Verfahren gemäss Anspruch 1, in dem ernährungs- und gesundheitsförderliche Ernährungsmittel währen dem Mahlen als Ölabsorptionsmittel verwendet werden.

5. Das Verfahren gemäss Anspruch 1, in dem das während des Mahlverfahrens zu verwendende Ölabsorptionsmittel aus einem oder mehreren gemahlenen Getreideflocken, deren Mehl, deren Kleie oder Stärke, vorgelierte und resistente Stärke mit Protein bevorzugt wird.

6. Das Verfahren gemäss Anspruch 1, in dem das während des Mahlverfahrens zu verwendende Ölabsorptionsmittel extrudiertes oder hydrolisiertes Mehl ist.

7. Das Verfahren gemäss Anspruch 1, in dem während oder nach dem Mahlen wahlweise Antibackmittel zu den Ölabsorptionsmitteln hinzugefügt werden.

8. Das Verfahren gemäss Anspruch 1, in dem während oder nach dem Mahlen, aromaveya geschmackverstärkende Mittel zusätzlich zu den Ölabsorptionsmitteln den ganzen Oliven hinzugefügt werden.

## Revendications

1. Le procédé d'obtention d'olives en farine, **caractérisé en ce que** les olives entières dénoyautées et séchées sont mises sous terre en présence d'une substance absorbant l'huile.

2. Le procédé selon la revendication 1, là où toutes les variétés d'olives non organiques ou organiques sont utilisées comme matière première.

3. Le procédé selon la revendication 1, où l'humidité est réduite par le séchage des olives pour prévenir la formation d'agglutinement au cours du processus de broyage, **caractérisé en ce que** le processus de séchage soit effectué entre -80 ° C et 80 ° C pendant 24-120 heures dans un incubateur avec ventilateur, sans ventilateur et avec aspirateur, un sécheur solaire, à micro-ondes, à infrarouge ou lyophilisateur.

4. Le procédé selon la revendication 1, dans laquelle les matières nutritives qui sont bénéficiaires à la nutrition et à la santé, sont utilisées pendant le broyage comme substance absorbant l'huile.

5. Le procédé selon la revendication 1, dans lequel la substance absorbant l'huile à utiliser au cours du processus de broyage est choisi parmi un ou plusieurs des céréales broyées, leur farine, leur son ou leur amidon, l'amidon pré-gélatinisé et résistant ayant une protéine.

6. Le procédé selon la revendication 1, dans lequel la substance absorbant l'huile à utiliser au cours du processus de broyage soit de la farine extrudée ou hydrolysée.

7. Le procédé selon la revendication 1, dans lequel au cours ou après broyage les agents antimottants sont éventuellement ajoutés en plus des substances absorbant les huiles.

8. Le procédé selon la revendication 1, dans lequel pendant ou après le broyage, les substances améliorant la saveur ou le goût sont ajoutés aux olives entières, en plus des substances absorbant les huiles.
